(19) Europäisches Patentamt
European Patent Office
Office européen des brevets

(11) EP 3 521 344 B1

# (12) EUROPEAN PATENT SPECIFICATION

(45) Date of publication and mention of the grant of the patent:
**23.08.2023 Bulletin 2023/34**

(21) Application number: **17856378.9**

(22) Date of filing: **28.09.2017**

(51) International Patent Classification (IPC):
***C08J 5/00*** *(2006.01)* ***B65D 1/00*** *(2006.01)*
***C08K 5/3417*** *(2006.01)*

(52) Cooperative Patent Classification (CPC):
(C-Sets available)
**C08K 5/3417; B29C 49/071; B65D 1/00;**
**C08J 5/00;** B29C 2949/0715 (Cont.)

(86) International application number:
**PCT/JP2017/035329**

(87) International publication number:
**WO 2018/062429 (05.04.2018 Gazette 2018/14)**

## (54) MOLDED BODY HAVING EXCELLENT GAS BARRIER PROPERTIES

FORMKÖRPER MIT HERVORRAGENDEN GASBARRIEREEIGENSCHAFTEN

CORPS MOULÉ PRÉSENTANT D’EXCELLENTES PROPRIÉTÉS DE BARRIÈRE AU GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2016 JP 2016190039**

(43) Date of publication of application:
**07.08.2019 Bulletin 2019/32**

(73) Proprietor: **Toyo Seikan Group Holdings, Ltd.**
**Shinagawa-ku**
**Tokyo 141-8627 (JP)**

(72) Inventors:
- **HIRAYAMA, Yukiko**
**Yokohama-shi**
**Kanagawa 240-0062 (JP)**
- **YAMADA, Toshiki**
**Yokohama-shi**
**Kanagawa 240-0062 (JP)**
- **SAWA, Yoshiki**
**Yokohama-shi**
**Kanagawa 240-0062 (JP)**
- **MURAMATSU, Kanna**
**Yokohama-shi**
**Kanagawa 240-0062 (JP)**

(74) Representative: **J A Kemp LLP**
**80 Turnmill Street**
**London EC1M 5QU (GB)**

(56) References cited:
**EP-A1- 2 669 334**
**EP-A1- 2 799 497**
**WO-A1-2012/102086**
**WO-A1-2013/099921**
**WO-A1-2014/136914**
**WO-A1-2015/137450**
**JP-A- 2014 172 219**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/3417, C08K 5/098, C08L 67/02;**
**C08K 5/3417, C08L 67/02**

## Description

Technical Field:

This invention relates to a formed body having excellent gas-barrier property and, more specifically, to a formed body that exhibits excellent gas-barrier property due to the use of an oxygen-absorbing component in small amounts.

Background Art:

Thermoplastic resins or polyester resins such as polyethylene terephthalate (PET), etc. feature such excellent properties as formability, transparency, mechanical strength, resistance against chemicals and, besides, have relatively high barrier property against gases such as oxygen and the like gases. Therefore, the polyester resins have been used in a variety of fields as packaging materials like films, sheets, and bottles. To further improve the gas-barrier property, there has been widely used an oxygen absorber.

As the oxygen absorber, there have been known inorganic oxygen absorbers such as iron powder and the like. The oxygen absorber of this kind undergoes oxidation by itself to absorb oxygen; i.e., exhibits barrier property by shutting off the permeation of oxygen. The inorganic oxygen absorber, however, causes the resin to be colored and, therefore, cannot be used in the field of packaging where transparency is required. In the field of packaging, therefore, it is a generally accepted practice to use organic oxygen absorbers that do not cause the resins to be colored.

For example, patent documents 1 to 3 filed by the present applicant are disclosing, as organic oxygen absorbers, acid anhydrides represented by the following formula;

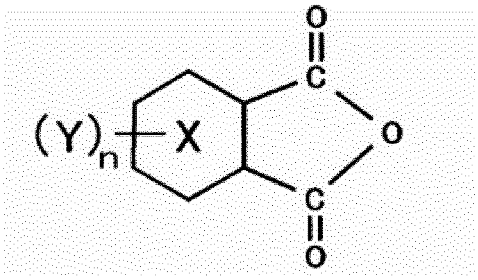

wherein a ring X is an aliphatic ring having an unsaturated bond, n is 0 or 1, and Y is an alkyl group, derivatives such as ester, amide, imide and dicarboxylic acid derived from the above acid anhydrides; and polymers that contain constituent units derived from the above acid anhydrides.

Moreover, a patent document 4 discloses non-polymeric oxidizing organic compounds represented by the following formulas I and II;

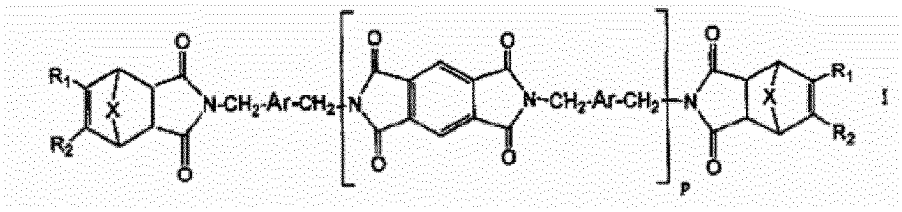

I

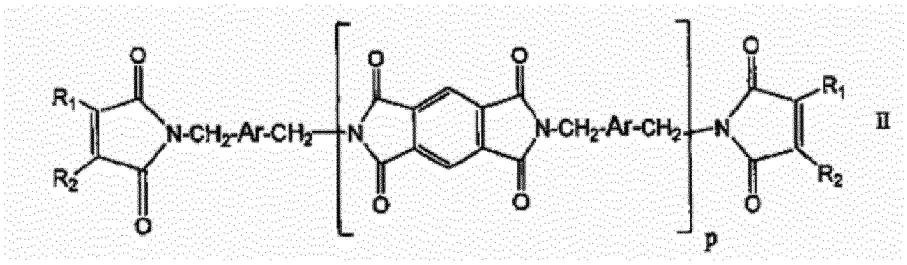

II

wherein Ar is a phenylene part or a naphthalene part, $R_1$ and $R_2$ are hydrogen atoms, alkyl groups, alkenyl groups or aryl groups, X is O or $-(CH_2)_n-$, and n and p are each 0, 1 or 2.

The compounds disclosed in the above patent documents 1 to 4 exhibit oxygen-absorbing property due to their autoxidation. To gain a sufficient degree of gas-barrier property, however, these compounds had to be used in large amounts.

Prior Art Documents:

Patent Documents:

Patent document 1: WO2012/102086 (EP2669334)
Patent document 2: WO2013/099921 (EP2799497)
Patent document 3: JP-A-2015-174895 (WO 2015/137450)
Patent document 4: JP-A-2013-531084

Outline of the Invention:

Problems that the Invention is to Solve:

It is, therefore, an object of the present invention to provide a formed body that exhibits excellent gas-barrier property despite of using an oxygen-absorbing component in small amounts.

Means for Solving the Problems:

According to the present invention, there is provided a formed body of a resin having a wall portion, the wall portion containing, as an oxygen-absorbing component, a non-polymeric oxygen-absorbing organic component in an amount of 0.5 to 2.5% by mass, and having a ratio of oxygen permeation rates expressed by the following formula that is suppressed to be not more than 42%,

$$\text{Ratio of oxygen permeation rates} = (P/P_0) \times 100$$

wherein P is an oxygen permeation rate (cc) through the wall portion, and $P_0$ is an oxygen permeation rate (cc) through the wall portion of the same thickness but without containing the oxygen-absorbing component, and wherein:

said non-polymeric oxygen-absorbing organic component is an imide compound derived from an acid anhydride represented by the following formula (1),

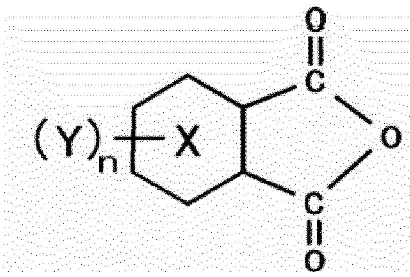

(1)

wherein the ring X is an aliphatic ring having an unsaturated bond, n is the number of substituents Y bonded to said ring X and is an integer of 0 or 1, and Y is an alkyl group; and
said oxygen-absorbing component is contained in one or more oxygen-absorbing layers that comprise said oxygen-absorbing component dispersed in a matrix resin and whose total thickness satisfies an area ratio of 5 to 20% of the cross section of the wall portion.

In the formed body of the present invention, it is desired that:

(1) The wall portion, further, contains cobalt as an oxygen-absorbing component, the content of cobalt being not

more than 40 ppm; or

(2) The wall portion does not contain cobalt as the oxygen-absorbing component.

It is, further, desired that:

(3) The formed body includes inner and outer layers of a polyester, and an intermediate layer that is said oxygen-absorbing layer in which the oxygen-absorbing component is dispersed in a matrix of polyester;

(4) Has the shape of a preform for forming a container; or

(5) Has the shape of a blow-formed bottle.

Effects of the Invention:

The formed body of the present invention contains oxygen-absorbing components that are non-polymeric oxygen-absorbing organic components (hereinafter often abbreviated as oxygen-absorbing organic components) that are concentrated in the wall portion thereof. By using the oxygen-absorbing organic components in only small amounts, therefore, it is made possible to suppress the ratio of the oxygen permeation rates to be not more than 42%. If reference is made to the Experimental Examples appearing later as shown in, for example, Fig. 1, a PET bottle of Experimental Example 8 containing the oxygen-absorbing organic component in an amount of 1.0% by mass homogeneously dispersed therein, exhibited a concentration of the dissolved oxygen (4.25 ppm after 8 weeks) that was nearly the same as that of a PET bottle of Experimental Example 10 that contained no oxygen-absorbing organic component. However, the concentration of the dissolved oxygen had been decreased down to about 1.756 ppm (after 8 weeks) in the case of a PET bottle of Experimental Example 1 that contained the same amount of the oxygen-absorbing organic component being concentrated near the center of the wall portion.

The reason is not clear why the gas-barrier property is improved strikingly according to the present invention. The present inventors, however, presumes it as described below. First of all, the oxygen-absorbing organic components disclosed in the patent documents 1 to 4 absorb oxygen as they undergo autoxidation reaction successively through the propagation of radicals, and contribute to improving the gas-barrier property of the formed bodies. Therefore, if the oxygen-absorbing organic components are added in reduced amounts, then the distance increases among the components; i.e., radicals propagate less. Accordingly, the oxygen-absorbing organic components become no longer capable of absorbing oxygen in sufficient amounts.

In the present invention, however, the oxygen-absorbing organic components are concentrated in the center of the wall portion of the formed body such as bottle. Therefore, the distance is short among the components, and the generated radicals can be all propagated to the other oxygen-absorbing organic components. The oxygen-absorbing organic components can, therefore, be autoxidized maintaining a high degree of probability, and improved gas-barrier property is exhibited by efficiently using small amounts of the oxygen-absorbing organic components.

In addition, according to the present invention, the oxygen-absorbing organic components are made present in the center of the wall portion of a bottle or the like body in the direction of thickness effectively preventing the components from eluting out into the content. This also effectively prevents a decrease in the properties such as gas-barrier property.

Moreover, the oxygen-absorbing organic components used in the present invention are not polymers and hence can be excellently dispersed in the matrix resin making it possible to maintain transparency to a favorable degree.

BRIEF DESCRIPTION OF THE DRAWINGS:

[Fig. 1] It is a diagram showing changes in the concentration of the dissolved oxygen in the bottles without using catalyst obtained in Experimental Examples 1 and 8 with the passage of time.

[Fig. 2] It is a diagram showing changes in the concentration of the dissolved oxygen in the bottles using a catalyst obtained in Experimental Examples 3 and 9 with the passage of time.

Modes for Carrying Out the Invention:

The formed body of the present invention is made of a resin and contains, in the wall portion thereof, a non-polymeric oxygen-absorbing organic component as the oxygen-absorbing component.

<Resins>

As the resin for use in the present invention, there can be used either a thermoplastic resin or a thermosetting

resin so far as it permits the non-polymeric oxygen-absorbing component that will be described later to be dispersed therein when it is formed into a formed body. From the standpoint of formability, however, it is desired to use the thermoplastic resin.

The thermoplastic resin may be a widely known one. As the widely known thermoplastic resin, there can be exemplified the following compounds.

Olefin resins such as low-density polyethylene, high-density polyethylene, polypropylene, poly 1-butene, poly 4-metyl-1-pentene, or random or block copolymers of α-olefins such as ethylene, propylene, 1-butene or 4-methyl-1-pentene, or cyclic olefin copolymers thereof;

Ethylene·vinyl copolymers, such as ethylene·Vinyl acetate copolymer, ethylene-vinyl alcohol copolymer and ethylene·vinyl chloride copolymer;
Styrene resins such as polystyrene, acrylonitrile· styrene copolymer, ABS, and α-methylstyrene·styrene copolymer;
Vinyl resins such as polyvinyl chloride, polyvinylidene chloride, vinyl chloride- vinylidene chloride copolymer, methyl polyacrylate and methyl polymethacrylate;
Polyamide resins such as nylon 6, nylon 6-6, nylon 6/6-6 copolymer, polymetaxylileneadipamide, nylon 6-10, nylon 11, nylon 12 and nylon 13;
Polyester resins such as polyethylene terephthalate (PET), polybutylene terephthalate, polyethylene naphthalate, polytrimethylene naphthalate and copolymerized polyesters thereof;
Polycarbonate resins;
Polyphenylene oxide resins; and
Biodegradable resins such as polylactic acid;

as well as blends of these thermoplastic resins so far as they do not impair the formability.

Among the thermoplastic resins exemplified above, it is desired to use a resin that has been favorably used as a packaging material, such as olefin resin or polyester resin since it exhibits oxygen-barrier property upon absorbing oxygen and does not develop yellow color even after having absorbed oxygen. Particularly desirably, a polyester resin is used since it has a high glass transition temperature (Tg) and, therefore, can be kneaded at a high temperature so as to be formed.

The polyester resin should have a molecular weight which is at least large enough for forming a film. Preferably, therefore, there is used the polyester resin having, for example, an intrinsic viscosity (I.V.) in a range of 0.6 to 1.40 dl/g and, specifically, 0.63 to 1.30 dl/g. Specifically, there is used the one that can be biaxially stretch-blow-molded and crystallized, such as polyethylene terephthalate (PET), polybutylene terephthalate or polyethylene naphthalate. It is, further, allowable to use a blend of polyester, polycarbonate and arylate resin.

The present invention uses, particularly preferably, a PET resin of the grade of packaging in which not less than 60 mol% and, preferably, not less than 80 mol% of the ester recurring units are ethylene terephthalate units.

As the dibasic acid other than the terephthalic acid, there can be exemplified aromatic dicarboxylic acids such as isophthalic acid, phthalic acid and naphthalenedicarboxylic acid; alicyclic dicarboxylic acids such as cyclohexanedicarboxylic acid; and aliphatic dicarboxylic acids such as succinic acid, adipic acid, sebacic acid and dodecanedioic acid, which may be used in one kind or in a combination of two or more kinds. Further, as the diol component other than the ethylene glycol, there can be exemplified propylene glycol, 1,4-butane diol, diethylene glycol, 1,6-hexylene glycol, cyclohexane dimethanol and ethylene oxide adduct of bisphenol A, which may be used in one kind or in a combination of two or more kinds.

Further, the present invention favorably uses those resins that have been known as so-called gas-barrier resins. The gas-barrier resins are the resins having excellent oxygen shut-off property. Use of the gas-barrier resin as the base material resin makes it possible to lengthen the effective life of the oxygen-absorbing organic components and to exhibit excellent oxygen-barrier property over extended periods of time. It is, further, possible to improve barrier property against gases (e.g., water vapor and carbonic acid gas) in addition to oxygen.

As the gas-barrier resin, there can be exemplified nylon 6, nylon 6·6, nylon 6/6·6 copolymer, polymetaxylylenediadipamide (MXD6), nylon 6·10, nylon 11, nylon 12 and nylon 13. Among these polyamides, it is desired to use a polymetaxylylenediadipamide having terminal amino groups in an amount of not less than 40 eq/106 g and, specifically, not less than 50 eq/106 g since it is highly resistant against being deteriorated by oxidation.

As the gas-barrier resin other than the polyamide resin, there can be exemplified an ethylene-vinyl alcohol copolymer. For instance, there can be preferably used a saponified copolymer that is obtained by so saponifying an ethylene-vinyl acetate copolymer having an ethylene content of 20 to 60 mol% and, specifically, 25 to 50 mol% that the degree of saponification is not less than 96% and, specifically, not less than 99 mol%.

The above gas-barrier resins should have molecular weights that are at least large enough for forming films.

<Oxygen-absorbing components>

The present invention uses a non-polymeric oxygen-absorbing organic component as the oxygen-absorbing component.

(Non-polymeric oxygen-absorbing organic components)

The non-polymeric oxygen-absorbing organic component is an imide compound derived from an acid anhydride represented by the following formula (1),

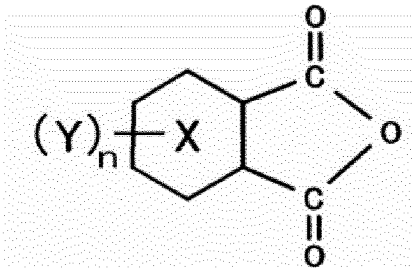

(1)

wherein the ring X is an aliphatic ring having an unsaturated bond, n is the number of substituents Y bonded to said ring X and is an integer of 0 or 1, and
Y is an alkyl group.

Concrete embodiments of the acid anhydrides expressed by the above formula (1) and the imide derivatives thereof have been widely known as described in the patent documents 1 to 3.

From such a standpoint that the radicals are subject to be easily generated, the oxygen-absorbing organic component is an imide compound derived from the acid anhydride expressed by the above formula (1). Preferably, the oxygen-absorbing organic component is a bisimide compound that is obtained by reacting the acid anhydride expressed by the above formula (1) with a diamine. The diamine to be reacted may be an aromatic diamine. From the standpoint of avoiding the development of yellow color after having absorbed oxygen, however, an aliphatic diamine is preferred. There is no particular limitation on the aliphatic diamine provided it is capable of reacting with the above acid anhydride. The divalent aliphatic groups between the amino groups may be any of straight chain, branched chain or cyclic hydrocarbon groups. From the standpoint of highly reliably preventing the development of yellow color, however, it is desired to use an alkylenediamine which is a non-cyclic (i.e., straight chain or branched chain) alkylene group, such as methylenediamine, ethylenediamine, propylenediamine or hexamethylenediamine.

Particularly preferred oxygen-absorbing organic component is a 1,6-bis(methyltetrahydrophthalimide)hexane represented by the following formula (2),

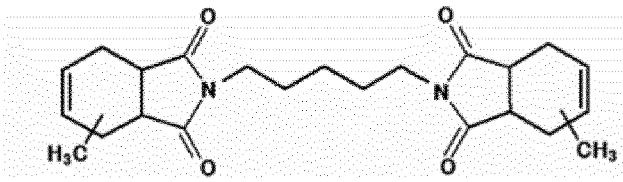

(2)

In the present invention, the formed body contains the oxygen-absorbing organic component in an amount of 0.5 to 2.5% by mass and, preferably, 1.0 to 2.0% by mass in the wall portion thereof. If the amount of the oxygen-absorbing organic component is too small, the gas-barrier property may become unsatisfactory. If the amount of the oxygen-absorbing organic component is too large, peeling may occur in the interfaces between the region where the oxygen-absorbing organic component is concentrated and other regions.

(Oxygen-absorbing assistants)

The invention can, further, use an oxygen-absorbing assistant as the oxygen-absorbing component. For instance, there can be also used a compound having a benzylhydrogen as represented by a styrene polymer, such as polystyrene in order to further enhance the oxygen-absorbing property. The benzylhydrogen is prone to be easily pulled out, i.e . , is pulled out at the time of, for example, melt-kneading, and forms a stable radical that difficultly reacts with

oxygen. This could become a radical source that forms radicals of the above-mentioned oxygen-absorbing organic component and accelerates the oxidation of the oxygen-absorbing organic component upon coming in contact with oxygen. Therefore, use of the oxygen-absorbing assistant helps further improve the oxygen-absorbing capability.

In order to further improve the oxygen-absorbing capability, it is also allowable to use, as the oxygen-absorbing assistant, a transition metal catalyst that has been usually used for the formed bodies of this kind. The transition metal catalyst is added at the time of producing the base material resin or at the time of forming the body in order to absorb oxygen. As the transition metal used for the transition metal catalyst, there can be exemplified iron, cobalt, nickel, copper, silver, tin, titanium, zirconium, vanadium, chromium and manganese. However, cobalt is most desirably used from the standpoint of accelerating the oxidation of the above-mentioned oxygen-absorbing organic component and enhancing the oxygen-absorbing capability. The catalyst of the transition metal is, usually, used in the form of an inorganic salt of the transition metal of a low valence, an organic salt thereof or a complex thereof. Their concrete forms have been widely known as closely described in, for example, JP-A-2004-161796.

Use of the transition metal catalyst, however, could bring about inconveniences such as oxidation and deterioration of the resin, a resulting decrease in the strength and a decrease in the oxygen-barrier property, and could, further, by-produce low molecular decomposed products that become a cause of offensive odor. Therefore, use of the transmission metal catalyst should be limited to such a degree that the above inconveniences are negligible. Even when used, the amount thereof should be limited to be as small as possible. When the transition metal catalyst is, for example, cobalt, the amount thereof, calculated as metal, should be not more than 40 ppm and, specifically, less than 10 ppm in the wall portion of the formed body. The best way is not to use the transition metal catalyst. In the present invention, the oxygen-absorbing component is concentrated in the center in the direction of thickness. This makes it possible not only to decrease the amount of use of the oxygen-absorbing organic component as demonstrated in Examples appearing later but also to produce the oxygen-absorbing capability to a sufficient degree by using the transition metal catalyst in decreased amounts or even without using the transmission metal catalyst.

According to the present invention, further, a known N-hydroxyphthalimide compound that works as an oxidizing catalyst can be used as an oxygen-absorbing assistant in order to improve the oxygen-absorbing property. The N-hydroxyphthalimide compound permits hydrogen atoms to be easily pulled out from the N-hydroxyimide groups due to molecular oxygen, and whereby radicals are generated. The radicals then pull out the hydrogen atoms from the oxygen-absorbing organic component, and form alkyl radicals. The N-hydroxyphthalimide compound thus works as an oxidizing catalyst.

<Formed bodies>

The formed body of the present invention exhibits excellent gas-barrier property despite of containing the oxygen-absorbing organic component in an amount of 2.5% by mass at the greatest. The reason why the present invention exhibits such an effect is because the wall portion contains therein a region where there are concentrated the oxygen-absorbing components, i.e., the oxygen-absorbing organic component and the oxygen-absorbing assistant that is added as required. In the bottle-like containers and preforms, the wall portion stands for a region other than the mouth portion, neck portion and bottom portion or, in other words, stands for a region from the shoulder portion to the body portion. In the cup-like and tray-like containers, the wall portion stands for a region other than the flange and the bottom portion. In the tubular containers, the wall portion stands for a region other than the mouth portion and neck portion. When the formed body of the present invention assumes the form of a film, a sheet and a bag made of them, the wall portion stands for all of them.

The formed body of the present invention has a structure where the oxygen-absorbing component is concentrated in the central portion in the direction of thickness.

In a laminated structure, an interface is present between a region where the oxygen-absorbing component is dispersed and a region where there is no oxygen-absorbing component. That is, a layer where the oxygen-absorbing component is dispersed in the matrix resin (hereinafter often referred to as oxygen-absorbing layer) is provided as an intermediate layer between the inner layer and the outer layer. The laminated structure is not limited to the three-layer constitution of inner layer, outer layer and intermediate layer only but may be of a constitution of four or more layers. Further, the oxygen-absorbing layer may exist in a number of only one or may exist repetitively in a plurality of numbers.

When the formed body of the present invention has the laminated structure, it is desired that the inner layer, outer layer and intermediate layer are made of a resin of the same kind from the standpoint of close adhesion. From the standpoint of realizing a favorable oxygen-barrier property, in particular, it is further desired that the inner layer, outer layer and intermediate layer are all made of a polyester resin. Particularly preferably, from the standpoint of formability, the inner layer, outer layer and intermediate layer are all made of a PET resin, and the PET resin in the intermediate layer is lowly crystalline containing a copolymerizable component in an amount of 2 to 30 mol%. From the standpoint of separation when put to the recycling work, on the other hand, the inner layer, outer layer and intermediate layer may be made of resins of different kinds.

In the invention, the oxygen-absorbing layer has a small thickness. From the standpoint of obtaining the effect of the invention to a maximum degree, it is desired that the oxygen-absorbing layer has a small thickness. Concretely speaking, the oxygen-absorbing layer is formed at an area ratio of 5 to 20% and, preferably, at an area ratio of 5 to 15% of the cross section of the wall portion. If the oxygen-absorbing layer is too thin, the gas-barrier property may not often be exhibited to a sufficient degree. Even if too thick, there is obtained no particular advantage but rather a disadvantage of an increase in the cost of production due to an increase in the amount of the oxygen-absorbing component that is used. In case there are formed a plurality of oxygen-absorbing layers, the total thickness thereof satisfies the above numerical range.

In the invention, the thickness ratio of the sectional area of the wall portion is measured at the center in the direction of height of the wall portion of the formed body. It does not matter even if the wall portion partly includes a sectional area where there is no oxygen-absorbing component provided the amount of the oxygen-absorbing organic component, the amount of the oxygen-absorbing assistant that is added as required and the ratio of the oxygen permeation rates that will be described later, are all lying within the predetermined numerical ranges.

The position of the oxygen-absorbing layer in the direction of the thickness should be separated away from the surface of the formed body to such a degree that the oxygen-absorbing organic component is not eluted out.

The formed body of the present invention has the composition and the structure as described above. Therefore, the wall portion thereof is capable of effectively shutting off the permeation of oxygen as compared to the wall portion of a formed body that has the same thickness and that is similarly formed without, however, using the oxygen-absorbing component. Concretely speaking, the ratio of the oxygen permeation rates expressed by the following formula is suppressed to be not more than 42% and, specifically, to be 2 to 25%.

$$\text{Ratio of oxygen permeation rates} = (P//P_0) \times 100$$

wherein P is an oxygen permeation rate (cc) through the wall portion, and $P_0$ is an oxygen permeation rate (cc) through the wall portion of the same thickness but without containing the oxygen-absorbing component.

The oxygen permeation rates can be measured by a known means depending on the form of the formed body. For example, as will be described in Examples appearing later, the oxygen permeation rate can be calculated from the concentration of the dissolved oxygen that is measured by using a water dissolved oxygen concentration meter (Oxygen Indicator: manufactured by Orbisphere Laboratories, Co.).

As described above, the formed body of the present invention has not only excellent gas-barrier property but also such a property that does not permit the oxygen-absorbing component to be eluted out. Therefore, the formed body can be favorably used from a packaging material through up to a variety of applications. In the use as the packaging materials, the formed body of the invention can be used in the form of, for example, film, sheet, cup, tray, bottle or tube in order to absorb oxygen in the hermetically packed containers.

The packaging container can be formed by a means known per se., such as forming a film by the extrusion molding, and sticking the obtained films together by heat-sealing to obtain a bag-like container. It is, further, allowable to form a sheet-like or a test tube-like preform and subject the preform to the secondary forming such as vacuum forming, expansion, forming, compressed air forming, plug assist forming or blow-stretch molding to obtain a container of the form of cup, tray or bottle. Moreover, it is also allowable to directly obtain a tubular container by the extrusion molding, injection molding or direct-blow molding.

Owing to its excellent oxygen-absorbing property, the formed body of the present invention exhibits more excellent oxygen-barrier property. Therefore, the formed body, when formed as a packaging container, is very suited for containing various contents that might be deteriorated in the presence of oxygen, i.e., beverages such as beer, wine, fruit juices and carbonated soft drinks; foods such as fruits, nuts, vegetables, meat products, infant's foods, coffee, jam, mayonnaise, ketchup, edible oils, dressings, sauces, foods boiled in soy sauce, and milk products; pharmaceuticals; cosmetics; gasoline; and the like. Because of its excellent transparency, moreover, the formed body of the invention is also suited for the uses where transparency is required.

## EXAMPLES

The present invention will be further described with reference to the following Experimental Examples but to which only the invention is in no way limited. Described below are the materials and the testing methods used in the following Experimental Examples.

### <Materials>

Described below are the materials used in the Experimental Examples.

(1) PET resins

PET 1: Copolymerized polyethylene terephthalate resin (IV = 0.77) of isophthalic acid (copolymerizing ratio = 0.3 mol%) and diethylene glycol (copolymerizing ratio = 1.8 mol%)
PET 2: Copolymerized polyethylene terephthalate resin (IV = 0.83) of isophthalic acid (copolymerizing ratio = 1.8 mol%) and diethylene glycol (copolymerizing ratio = 2.3 mol%)

(2) Transition metal catalyst

Cobalt neodecanoate (produced by OMG AMERICA, Inc.)

(3) Oxygen-absorbing organic component

6 kg of a hexamethylenediamine (produced by Toray Industries Inc.) was dissolved in 57 kg of a 2-propanol in a nitrogen atmosphere, and to which was mildly added 19 kg of a mixture of the anhydrous methyltetrahydrophtalic acid (HN-2200: produced by Hitachi Chemical Co., Ltd.) that contained 45% by mass of an anhydrous 4-methyl-△3-tetrahydrophthalic acid and 21% by mass of an anhydrous cis-3-methyl-△4-tetrahydrophthalic acid such that the liquid temperature did not exceed 50°C. After thrown in whole amounts, the reaction was conducted at a temperature of 100 to 160°C for about 7 hours while removing the generated water and the solvent to obtain a bisimide compound from the hexamethylenediamine and the anhydrous phthalic acid. As a result, there was obtained 16.7kg of the oxygen-absorbing organic component.

<Preparation of the pelletized master batch resins>

By using a twin screw extruder equipped with a granulating facility (TEM-35B: manufactured by Toshiba Machine Co., Ltd.) while setting the barrel temperature at 200 to 280°C, the PET resin and the oxygen-absorbing organic component were mixed and kneaded together, and the mixture thereof was then extruded in a stranded manner to obtain a pelletized oxygen-absorbing resin. The oxygen-absorbing organic component was added in an amount of 10% by mass or 20% by mass per the total of the PET resin and the oxygen-absorbing component.
A pelletized master batch 1 was prepared by using the PET 1 as the PET resin and by using the oxygen-absorbing organic component at a concentration of 10% by mass. A pelletized master batch 2 was prepared by using the PET 1 as the PET resin and by using the oxygen-absorbing organic component at a concentration of 20% by mass. A pelletized master batch 3 was also prepared by using the PET 2 as the PET resin and by using the oxygen-absorbing organic component at a concentration of 10% by mass.

<Area percentage of the oxygen-absorbing layer>

The preforms prepared in the Experimental Examples described later were cut in cross section at the center of the body portion in the direction of height. By using an optical microscope (confocal laser scan microscope manufactured by Carl Zeiss GmbH), the cross sections were observed at a magnification of 50 times. The area percentages of the oxygen-absorbing layers on the cross section of the preforms were calculated.
Since the layers in the preform have been stretched at the same ratio, the area percentages of the oxygen-absorbing layers of the bottles that are the final objects should be in substantial agreement with those of the preforms.

<Ratio of the oxygen permeation rates>

(1) Measuring the dissolved oxygen concentration

Oxygen-free water having an oxygen concentration of almost 0 was produced by using an oxygen-free water producing apparatus (LOW DISSOLVED OXYGEN: manufactured by Miura Industries Co., Ltd.). The bottles (full-filled capacity of 528 ml) prepared in Experimental Examples described later) were fully filled with the oxygen-free water and were sealed with a plastic cap. Next, the bottles after having been sealed were preserved in an air-conditioned chamber of 23°C50%R.H. for 8 weeks at the longest. The concentrations of oxygen dissolved in water in the bottles after preserved were measured by using a water dissolved oxygen concentration meter (Oxygen Indicator: manufactured by Orbisphere Laboratories, Inc.).

(2) Calculating the oxygen permeation rate

The oxygen permeation rate (cc) was calculated from the dissolved oxygen concentration (ppm) measured in (1). Concretely, the oxygen permeation rate (cc) was calculated in compliance with the following formula by using the dissolved oxygen concentration (ppm), amount of water (528 ml) in the bottle, molar volume (24.6 L) at 23°C and molecular weight (32.0) of oxygen.

$$\text{Oxygen permeation rate (cc)} = 528\ (\text{ml}) \times \text{dissolved oxygen concentration (ppm)} \times 24.6\ (\text{L}) \times 0.001/32$$

(3) Calculating the ratio of the oxygen permeation rates

The oxygen permeation rate of the bottle calculated in (2) was divided by the oxygen permeation rate of the bottle (single-layered PET bottle) of Experimental Example 10 and was then multiplied by 100 to calculate the ratio of the oxygen permeation rates.

<Experimental Example 1>

By using a co-injection molding machine, there was prepared a multilayered preform having a two-kind-three-layer (PET/intermediate layer/PET) constitution.

Concretely speaking, the PET 1 that has been dried was thrown into a hopper of the injection-molding machine for forming the inner and outer PET layers (hereinafter often abbreviated as hopper for forming the inner and outer PET layers), and the pelletized master batch 1 was thrown into a hopper of the injection-molding machine for forming the intermediate layer (hereinafter often abbreviated as hopper for forming the intermediate layer). The inner layer, outer layer and intermediate layer were all formed at a temperature of 280°C. The preform weighed 25 g. The ratio of the intermediate layer was 10% by mass of the whole preform. The preform was so molded that the intermediate layer reached neither the mouth/neck portion nor the bottom portion. The concentration of the oxygen-absorbing organic component was 1.0% by mass in the wall portion of the container.

The area ratio of the oxygen-absorbing layer was confirmed on the cross section of the obtained preform.

Next, the surface of the body portion of the multilayered preform was heated from the outer side up to 100°C by using an infrared heater. Thereafter, the body portion was mechanically stretched in the axial direction of the bottle by using a stretch rod and, thereafter, the air was blown therein to biaxially stretch the body portion. There was thus formed a stretch-blow-molded bottle of a capacity of 500 ml, the body portion thereof being stretched by roughly 3 times longitudinally, 3 times transversely and 9 times in area. In carrying out the molding, the temperature of the mold was set at 60°C, and the high-pressure air of 3.5 MPa was blown in at room temperature (20°C).

The obtained bottle was measured for the concentration of oxygen dissolved in water therein, and from which an oxygen permeation rate and a ratio of oxygen permeation rates were calculated.

<Experimental Example 2>

A multilayered preform and a bottle were molded in the same manner as in Experimental Example 1 but throwing the pelletized master batch 2 to the hopper for forming the intermediate layer. The concentration of the oxygen-absorbing organic component in the wall portion of the container was 2.0% by mass. The area ratio of the oxygen-absorbing layer was confirmed on the cross section, the concentration of the dissolved oxygen was measured, the oxygen permeation rate was calculated, and the ratio of the oxygen permeation rates was also calculated.

<Experimental Example 3>

A multilayered preform and a bottle were molded in the same manner as in Experimental Example 1 but throwing the PET 2 that has been dried into the hopper for forming the inner and outer PET layers, throwing the pelletized master batch 3 to the hopper for forming the intermediate layer, and externally adding the cobalt neodecanoate in an amount of 70 ppm calculated as metal to the pelletized master batch 3 in the hopper for forming the intermediate layer. The concentration of the oxygen-absorbing organic component in the wall portion of the container was 1.0% by mass. The concentration of cobalt in the wall portion of the container was 7 ppm. The area ratio of the oxygen-absorbing layer was confirmed on the cross section, the concentration of the dissolved oxygen was measured, the oxygen permeation rate

was calculated, and the ratio of the oxygen permeation rates was also calculated.

<Experimental Example 4>

A multilayered preform and a bottle were molded in the same manner as in Experimental Example 3 but forming the intermediate layer at a ratio of 5% by mass. The concentration of the oxygen-absorbing organic component in the wall portion of the container was 0.5% by mass. The concentration of cobalt in the wall portion of the container was 3.5 ppm. The area ratio of the oxygen-absorbing layer was confirmed on the cross section, the concentration of the dissolved oxygen was measured, the oxygen permeation rate was calculated, and the ratio of the oxygen permeation rates was also calculated.

<Experimental Example 5>

A multilayered preform and a bottle were molded in the same manner as in Experimental Example 3 but forming the intermediate layer at a ratio of 20% by mass. The concentration of the oxygen-absorbing organic component in the wall portion of the container was 2.0% by mass. The concentration of cobalt in the wall portion of the container was 14 ppm. The area ratio of the oxygen-absorbing layer was confirmed on the cross section, the concentration of the dissolved oxygen was measured, the oxygen permeation rate was calculated, and the ratio of the oxygen permeation rates was also calculated.

<Experimental Example 6>

A multilayered preform and a bottle were molded in the same manner as in Experimental Example 3 but blending the pelletized master batch 3 and the PET 2 at a mass ratio of 8:2, throwing the thus obtained blend into the hopper for forming the intermediate layer, and externally adding the cobalt neodecanoate in an amount of 70 ppm calculated as metal to the blend in the hopper for forming the intermediate layer. The concentration of the oxygen-absorbing organic component in the wall portion of the container was 0.8% by mass. The concentration of cobalt in the wall portion of the container was 7 ppm. The area ratio of the oxygen-absorbing layer was confirmed on the cross section, the concentration of the dissolved oxygen was measured, the oxygen permeation rate was calculated, and the ratio of the oxygen permeation rates was also calculated.

<Experimental Example 7> (Reference only)

A multilayered preform and a bottle were molded in the same manner as in Experimental Example 2 but blending the pelletized master batch 3 and the PET 2 at a mass ratio of 2: 8, throwing the thus obtained blend into the hopper for forming the intermediate layer, externally adding the cobalt neodecanoate in an amount of 110 ppm calculated as metal to the blend in the hopper for forming the intermediate layer, and forming the intermediate layer at a ratio of 40% by mass of the whole preform. The concentration of the oxygen-absorbing organic component in the wall portion of the container was 0.8% by mass. The concentration of cobalt in the wall portion of the container was 44 ppm. The area ratio of the oxygen-absorbing layer was confirmed on the cross section, the concentration of the dissolved oxygen was measured, the oxygen permeation rate was calculated, and the ratio of the oxygen permeation rates was also calculated.

<Experimental Example 8> (Reference only)

By using a co-injection molding machine while halting the operation of the machine for injection-molding the intermediate layer, the PET 1 and the pelletized master batch 1 were blended together at a mass ratio of 9: 1, and the obtained blend was thrown into the hopper of the machine for injection-molding the inner and outer PET layers. By setting the temperature at 280°C, there was molded a single-layered PET preform weighing 25 g.

Using the same method as that of Experimental Example 1, the preform was biaxially stretch-blow molded into a single-layered PET bottle. The concentration of the oxygen-absorbing organic component in the wall portion of the container was 1.0% by mass.

The concentration of the dissolved oxygen was measured, the oxygen permeation rate was calculated, and the ratio of the oxygen permeation rates was also calculated.

<Experimental Example 9> (Reference only)

A single-layered bottle was molded in the same manner as in Experimental Example 8 but blending the PET 2 and pelletized master batch 3 at a mass ratio of 9: 1, throwing the thus obtained blend into the hopper for forming the

inner and outer PET layers, and externally adding the cobalt neodecanoate in an amount of 21 ppm calculated as metal to the blend in the hopper for forming the inner and outer PET layers. The concentration of the oxygen-absorbing organic component in the wall portion of the container was 1.0% by mass. The concentration of cobalt in the wall portion of the container was 21 ppm. The concentration of the dissolved oxygen was measured, the oxygen permeation rate was calculated, and the ratio of the oxygen permeation rates was also calculated.

<Experimental Example 10> (Reference only)

A single-layered bottle was molded in the same manner as in Experimental Example 8 but throwing the PET 1 only into the hopper for forming the inner and outer PET layers. The concentration of the dissolved oxygen was measured, the oxygen permeation rate was calculated, and the ratio of the oxygen permeation rates was also calculated.

Table 1 shows the constitutions of the bottles formed by the Experimental Examples, as well as the measured and calculated results thereof. Further, Fig. 1 is a graph showing relationships between the number of days of preservation and the concentration of the dissolved oxygen in Experimental Examples 1, 8 and 10. Fig. 2 is a graph showing relationships between the number of days of preservation and the concentration of the dissolved oxygen in Experimental Examples 3, 9 and 10. The bottles in the Experimental Examples 1 to 7 showed the ratios of the oxygen permeation rates that were lower than that of the single-layered bottle of Experimental Example 10 that contained no oxygen-absorbing component. On the other hand, the ratios of the oxygen permeation rates were not sufficiently small in the case of the bottles of Experimental Examples 8 and 9 that possessed no portion where the oxygen-absorbing component was contained at high concentrations. In the case of Experimental Example 7, the oxygen-absorbing layer was so thick that the concentration of the oxygen-absorbing organic component was low in the oxygen-absorbing layer. However, the oxygen-absorbing capability was exhibited since the oxygen-absorbing layer was blended with much cobalt.

[Table 1]

| | Area ratio of $O_2$-absorbing layer on the cross section (%) | Concentration of $O_2$-absorbing organic component (wt%) | | Cobalt concentration (ppm) | | Concentration of dissolved oxygen (*1) (ppm) | Oxygen Permeation rate (*1) (cc) | Ratio of oxygen permeation rate (to PET) (%) |
|---|---|---|---|---|---|---|---|---|
| | | Wall of container | $O_2$-absorbing layer | Wall of container | $O_2$-absorbing layer | | | |
| Ex. 1 | 10 | 1.0 | 10 | 0 | 0 | 1.756 | 0.71 | 40.0 |
| Ex. 2 | 10 | 2.0 | 20 | 0 | 0 | 1.008 | 0.41 | 23.0 |
| Ex. 3 | 10 | 1.0 | 10 | 7 | 70 | 0.402 | 0.16 | 9.2 |
| Ex. 4 | 5 | 0.5 | 10 | 3.5 | 70 | 1.062 | 0.43 | 24.2 |
| Ex. 5 | 20 | 2.0 | 10 | 14 | 70 | 0.106 | 0.04 | 2.4 |
| Ex. 6 | 10 | 0.8 | 8 | 7 | 70 | 0.755 | 0.31 | 17.2 |
| Ex. 7 | 40 | 0.8 | 2 | 44 | 110 | 0.97 | 0.39 | 22.1 |
| Ex. 8 | 100 | 1.0 | 1 | 0 | 0 | 4.25 | 1.73 | 96.8 |
| Ex. 9 | 100 | 1.0 | 1 | 21 | 21 | 4.12 | 1.67 | 93.8 |
| Ex. 10 | 0 | 0.0 | 0 | 0 | 0 | 4.39 | 1.78 | 100.0 |

*1: Measured in the 8-week period.

**Claims**

1. A formed body of a resin having a wall portion, said wall portion containing, as an oxygen-absorbing component, a non-polymeric oxygen-absorbing organic component in an amount of 0.5 to 2.5% by mass, and having a ratio of oxygen permeation rates expressed by the following formula that is suppressed to be not more than 42%,

$$\text{Ratio of oxygen permeation rates} = (P/P_0) \times 100$$

wherein P is an oxygen permeation rate (cc) through said wall portion, and $P_0$ is an oxygen permeation rate (cc) through the wall portion of the same thickness but without containing the oxygen-absorbing component, and wherein:

said non-polymeric oxygen-absorbing organic component is an imide compound derived from an acid anhydride represented by the following formula (1),

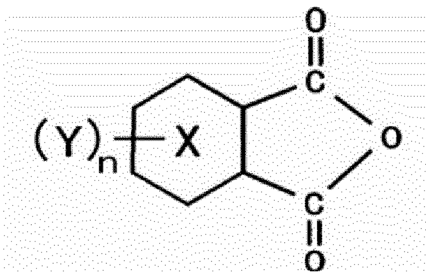

(1)

wherein the ring X is an aliphatic ring having an unsaturated bond, n is the number of substituents Y bonded to said ring X and is an integer of 0 or 1, and Y is an alkyl group; and
said oxygen-absorbing component is contained in one or more oxygen-absorbing layers that comprise said oxygen-absorbing component dispersed in a matrix resin and whose total thickness satisfies an area ratio of 5 to 20% of the cross section of the wall portion,
wherein the oxygen permeation rates and the thickness are measured according to the methods defined in the description.

2. The formed body according to claim 1, wherein said wall portion, further, contains cobalt as an oxygen-absorbing component, the content of cobalt being not more than 40 ppm.

3. The formed body according to claim 1, wherein said wall portion, does not contain cobalt as the oxygen-absorbing component.

4. The formed body according to claim 1, wherein the formed body includes inner and outer layers of a polyester, and an intermediate layer that is said oxygen-absorbing layer in which the oxygen-absorbing component is dispersed in a matrix of polyester.

5. The formed body according to claim 1, wherein the formed body has the shape of a preform for forming a container.

6. The formed body according to claim 1, wherein the formed body has the shape of a blow-formed bottle.

**Patentansprüche**

1. Ausgebildeter Körper eines Harzes mit einem Wandabschnitt, wobei der Wandabschnitt als eine sauerstoffabsorbierende Komponente, eine nicht polymere sauerstoffabsorbierende organische Komponente in einer Menge von 0,5 bis 2,5 Masse-% enthält und ein Verhältnis von Sauerstoffpermeationsraten aufweist, die durch die folgende Formel ausgedrückt werden, die unterdrückt wird, um nicht mehr als 42 % zu sein,

$$\text{Verhältnis von Sauerstoffpermeationsraten} = (P/P_0) \times 100$$

wobei P eine Sauerstoffpermeationsrate (cc) durch den Wandabschnitt ist, und $P_0$ eine Sauerstoffpermeationsrate (cc) durch den Wandabschnitt derselben Dicke ist, aber ohne die sauerstoffabsorbierende Komponente zu enthalten, und
wobei:

die nicht polymere sauerstoffabsorbierende organische Komponente eine Imidverbindung ist, die von einem sauren Anhydrid abgeleitet ist, das durch die folgenden Formel (1) dargestellt wird,

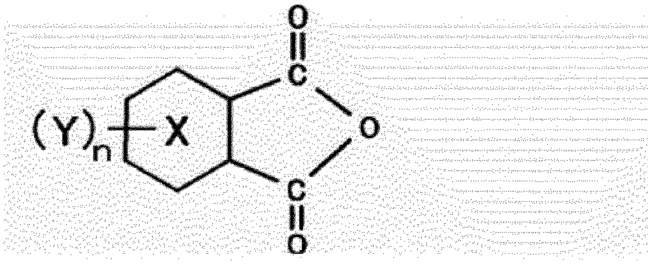
(1)

wobei der Ring X ein aliphatischer Ring mit einer ungesättigten Bindung ist, n die Anzahl von Substituenten Y ist, die an den Ring X gebunden sind, und eine ganze Zahl von 0 oder 1 ist, und Y eine Alkylgruppe ist, und
die sauerstoffabsorbierende Komponente in einer oder mehreren sauerstoffabsorbierenden Schichten enthalten ist, die die sauerstoffabsorbierende Komponente umfassen, die in einem Matrixharz dispergiert ist und deren Gesamtdicke ein Flächenverhältnis von 5 bis 20 % des Querschnitts des Wandabschnitts erfüllt,
wobei die Sauerstoffpermeationsraten und die Dicke gemäß den in der Beschreibung definierten Verfahren gemessen werden.

**2.** Ausgebildeter Körper nach Anspruch 1, wobei der Wandabschnitt ferner ein Kobalt als eine sauerstoffabsorbierende Komponente enthält, wobei der Gehalt an Kobalt nicht mehr als 40 ppm ist.

**3.** Ausgebildeter Körper nach Anspruch 1, wobei der Wandabschnitt kein Kobalt als die sauerstoffabsorbierende Komponente enthält.

**4.** Ausgebildeter Körper nach Anspruch 1, wobei der ausgebildete Körper Innen- und Außenschichten eines Polyesters und eine Zwischenschicht beinhaltet, die die sauerstoffabsorbierende Schicht ist, in der die sauerstoffabsorbierende Komponente in einer Matrix aus Polyester dispergiert ist.

**5.** Ausgebildeter Körper nach Anspruch 1, wobei der ausgebildete Körper die Form eines Vorformlings zum Ausbilden eines Behälters aufweist.

**6.** Ausgebildeter Körper nach Anspruch 1, wobei der ausgebildete Körper die Form einer blasgeformten Flasche aufweist.

## Revendications

**1.** Corps formé d'une résine ayant une partie de paroi, ladite partie de paroi contenant, en tant que composant absorbant l'oxygène, un composant organique non polymère absorbant l'oxygène en une quantité de 0,5 à 2,5 % en masse, et ayant un rapport de taux de perméation d'oxygène exprimé par la formule suivante qui est supprimée pour ne pas dépasser 42 %,

$$\text{Rapport des taux de perméation d'oxygène} = (P/P_0) \times 100$$

dans lequel P est un taux de perméation d'oxygène (cc) à travers ladite partie de paroi, et $P_0$ est un taux de perméation d'oxygène (cc) à travers la partie de paroi de même épaisseur mais sans contenir le composant absorbant l'oxygène, et
dans lequel :

ledit composant organique non polymère absorbant l'oxygène est un composé imide dérivé d'un anhydride d'acide représenté par la formule suivante (1),

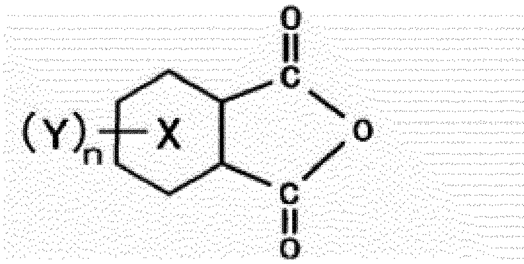

(1)

dans lequel le cycle X est un cycle aliphatique ayant une liaison insaturée, n est le nombre de substituants Y liés audit cycle X et est un nombre entier de 0 ou 1, et Y est un groupe alkyle ; et
ledit composant absorbant l'oxygène est contenu dans une ou plusieurs couches absorbant l'oxygène qui comprennent ledit composant absorbant l'oxygène dispersé dans une résine de matrice et dont l'épaisseur totale satisfait un rapport de surface de 5 à 20 % de la section transversale de la partie de paroi,
dans lequel les taux de perméation d'oxygène et l'épaisseur sont mesurés selon les procédés définis dans la description.

2. Corps formé selon la revendication 1, dans lequel ladite partie de paroi contient en outre du cobalt en tant que composant absorbant l'oxygène, la teneur en cobalt n'étant pas supérieure à 40 ppm.

3. Corps formé selon la revendication 1, dans lequel ladite partie de paroi ne contient pas de cobalt en tant que composant absorbant l'oxygène.

4. Corps formé selon la revendication 1, dans lequel le corps formé comprend des couches interne et externe d'un polyester, et une couche intermédiaire qui est ladite couche absorbant l'oxygène dans laquelle le composant absorbant l'oxygène est dispersé dans une matrice de polyester.

5. Corps formé selon la revendication 1, dans lequel le corps formé a la forme d'une préforme pour former un récipient.

6. Corps formé selon la revendication 1, dans lequel le corps formé a la forme d'une bouteille formée par soufflage.

Fig. 1

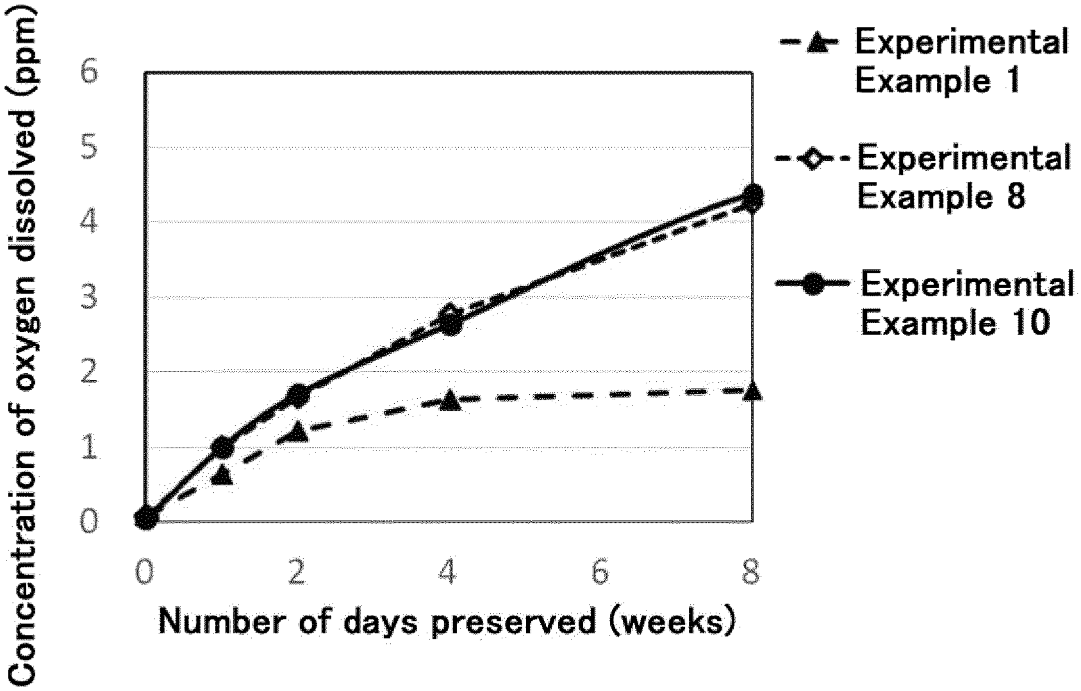
Concentration of oxygen dissolved (ppm)
0
1
2
3
4
5
6
0
2
4
6
8
Number of days preserved (weeks)
Experimental Example 1
Experimental Example 8
Experimental Example 10

Fig. 2

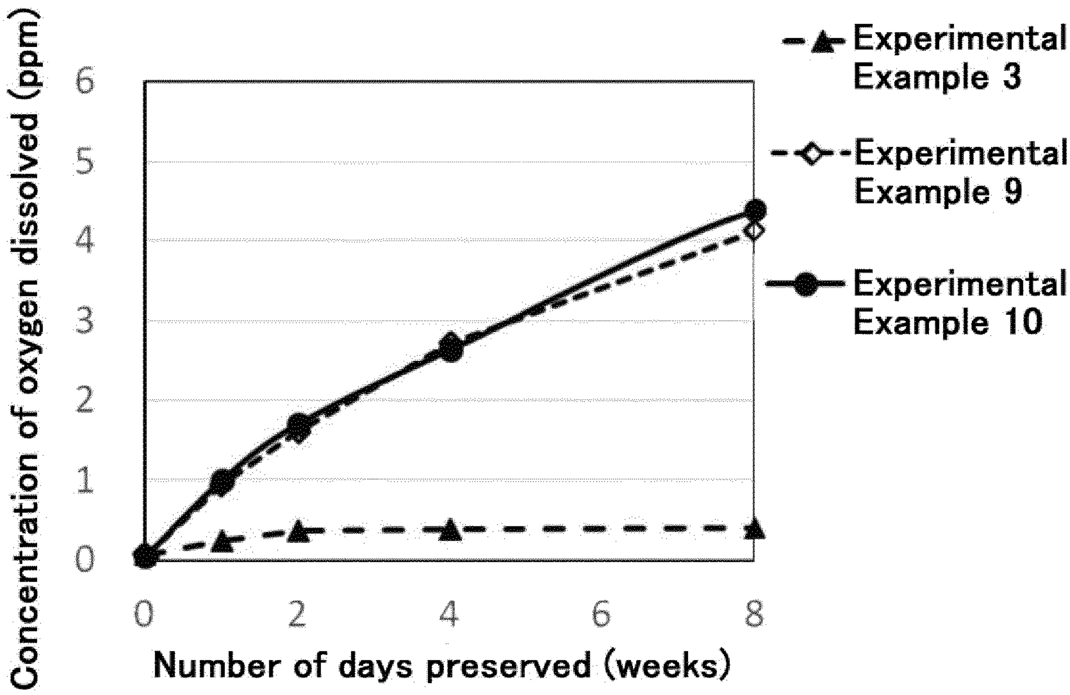
Concentration of oxygen dissolved (ppm)
0
1
2
3
4
5
6
0
2
4
6
8
Number of days preserved (weeks)
Experimental Example 3
Experimental Example 9
Experimental Example 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012102086 A
- EP 2669334 A
- WO 2013099921 A
- EP 2799497 A
- JP 2015174895 A
- WO 2015137450 A
- JP 2013531084 A
- JP 2004161796 A